# DEMANDE DE BREVET EUROPEEN

(11) **EP 4 101 632 A1**
(43) Date de publication de la demande: **14.12.2022**
(21) Numéro de dépôt: 21178905.2
(22) Date de dépôt: 11.06.2021
(51) Int. Cl.: B32B 5/02, B32B 9/02, B32B 9/04, B32B 27/12, B32B 27/36

(54) **EMBALLAGE ALIMENTAIRE**

(71) Demandeur: Organicpac, 52000 Chaumont (FR)
(72) Inventeur: BEYLER, François, 46004 Valencia (ES); BEYLER, Marc, 46004 Valencia (ES)
(74) Mandataire: Cabinet Bleger-Rhein-Poupon

(57) **Abrégé**

Emballage alimentaire, compostable, biodégradable et scellable, notamment de type barquette, comprenant une base (1) de fibre moulée de biomasse, recouverte d'un film barrière de protection contre les gaz et les liquides, caractérisé en ce que ledit film barrière de protection comprend au moins une couche de nanofibre de cellulose.

## Description

La présente invention entre dans le domaine des emballages alimentaires, notamment de type barquette alimentaire.

L'invention concerne particulièrement un emballage alimentaire intégralement compostable, biodégradable, scellable, étanche aux liquides, notamment aux huiles et aux graisses, imperméables aux gaz, notamment à l'oxygène, capable de résister à des températures comprises entre -40°C et + 200°C sur une durée d'environ 3 min maximum, par exemple lors d'une congélation, d'un passage au four ou au micro-onde.

Dans l'optique de préserver l'environnement, le traitement des déchets et le recyclage des emballages alimentaires sont devenus une priorité d'ordre écologique chez les industriels fabricants et chez les consommateurs. De la même manière, la durée de conservation des aliments aussi bien en milieu réfrigéré ou de congélation représente un axe majeur d'amélioration dans le domaine des emballages alimentaires.

En conséquence, dans le domaine industriel de production des emballages alimentaire, il existe un besoin de surmonter les contraintes de fabrication de ces emballages imposées par les réglementations en matière de recyclage, compostage des matériaux, tout en respectant les normes liées à la consommation et conservation des produits alimentaires.

De manière connue, les emballages alimentaires consistent en des matériaux plastiques thermoformés de polypropylène multicouche ou de polyéthylène téréphtalate. Ces matériaux représentent un coût de fabrication assez élevé en raison de la multitude des couches, d'une complexité dans le procédé de fabrication notamment pour maintenir les couches entres elles et des matériaux eux-mêmes.

De manière connue également, les emballages alimentaires peuvent être des matériaux en carton recouverts d'un plastique multicouche. Ces emballages alimentaires de conception multicouche compliquent énormément l'opération et les possibilités de recyclage par les usagers. En effet, ces derniers doivent séparer les couches les unes des autres pour respecter les contraintes de recyclages. En conséquence, dans la majorité des cas, les usagers abandonnent l'idée de recycler ce type d'emballage, ce qui a un impact défavorable pour l'environnement.

Ainsi, face à ses difficultés et problématiques, le but de la présente invention est de proposer un emballage alimentaire, de type barquette, compatible avec un usage de produits alimentaires, scellables facilement par un opercule et qui soit intégralement compostable et biodégradable, tout en étant produit rapidement, facilement et à un coût acceptable pour le marché.

L'objectif de la présente invention est de proposer un emballage respectant, à la fois, les normes alimentaires en termes de contact avec les aliments, conservations, préservation, congélation ou chauffage; mais aussi les normes écologiques de recyclage, compostage et de traitement des déchets.

La présente invention a pour but de pallier les inconvénients de l'état de la technique en proposant un emballage alimentaire compostable, biodégradable et scellable, notamment de type barquette.

On entend par le terme « **emballage alimentaire** », un emballage dont la matière dans sa globalité permet le contact avec tous types d'aliments, sous toutes formes, liquide ou solide, et sur une large gamme de températures, sans risquer une dégradation des aliments. L'usage dudit emballage alimentaire pour emballer les produits alimentaires, les conserver, les transporter, les chauffer, les congeler ou les réfrigérer, ne génère aucun risque sanitaire, notamment microbiologique, pour les consommateurs des aliments qu'il contient. Au sens de l'invention, le terme « emballage alimentaire » est donc relatif à un matériau destiné à un contact avec les aliments qui respecte les normes EN 19352004 et EN 102011.

On entend par le terme « **compostable** » le fait que l'emballage peut se transformer en compost, soit à domicile dans un bac de compostage, soit dans une usine de compostage industriel à des températures de 70°C. Au sens de l'invention, l'emballage compostable se dégrade sous certaines conditions de température, d'oxygène, d'humidité et sous l'action et au contact de certains micro-organismes. Selon l'invention, l'emballage compostable répond à la norme EN13432, ISO 14855 et ISO 16929. La norme EN 13432 définit la « désintégration » c'est-à-dire la fragmentation et la perte totale de visibilité dans le compost final, qui est mesurée par un test de compostage EN 14045. Dans ce test de compostage, on composte pendant 3 mois des échantillons de matériau d'essai avec des déchets organiques. On parle de désintégration, compostage lorsque la totalité des résidus supérieurs à 2 mm est inférieure à 10% de la masse initiale.

On entend par le terme « **biodégradable** », le fait que l'emballage puisse être décomposé par des organismes vivants, notamment des micro-organismes, soit dans le sol, soit dans l'eau, soit dans un bac de compostage ou soit dans une usine de compostage industriel, sans effet néfaste sur l'environnement dans lequel la dégradation a lieu et sur une durée courte de l'ordre de quelques mois maximum. Selon l'invention, l'emballage « biodégradable » répond à la norme EN 13432, il peut être valorisé par compostage au même titre que des déchets organiques. Pour répondre à la norme EN 13432, la biodégradabilité représente la conversion métabolique du matériau compostable en CO2, H2O et humus. Cette propriété de « biodégradabilité » est mesurée par des tests standards et normalisés ISO 14855. Un emballage est considéré comme « biodégradable » lorsqu'il atteint 90% de biodégradation en moins de 6 mois. De plus pour respecter cette norme EN 13432, après la dégradation de l'emballage, la concentration en azote, phosphore, magnésium, potassium, le pH, le contenu salin, et le niveau de solides volatils doivent rester stables et inchangés.

On entend par le terme « **scellable** », le fait que l'emballage alimentaire est dans un matériau permettant d'être scellé par un opercule à la main ou au travers d'une opération industrielle. Selon un mode de réalisation applicable à l'emballage alimentaire de l'invention, on peut réaliser l'opération de scellage à une température comprise entre 130°C et 195°C pendant une durée comprise entre 0,5 et 2,5 secondes, de préférence 1 seconde.

Ledit emballage alimentaire comprend une base de fibres moulée de biomasse, recouverte d'un film barrière de protection contre les gaz et les liquides.

On entend par le terme « **fibre moulée de biomasse** », un matériau perméable aux gaz, notamment à l'air, qui est de la cellulose moulée issue d'une fibre d'origine végétale. Ce matériau est, en tant que tel, intégralement compostable, biodégradable, scellable par un opercule, et peut convenir à un contact avec les produits alimentaire.

On entend par le terme « **film barrière de protection contre les gaz et les liquides** » une couche de matériau imperméable aux gaz et aux liquides, mais également à la vapeur d'eau. Cette couche de film est une barrière contre les gaz et les liquides, de sorte qu'ils ne traversent pas la base de fibre moulée de biomasse pour atteindre le contenu de l'emballage.

Au sens de l'invention, **les gaz sont par exemple** ceux ou une combinaison de ceux de la liste suivante : diazote N2, dioxygène O₂, dioxyde de carbone CO₂, argon Ar

De la même manière, au sens de l'invention, **les liquides sont définis** par tous types de produits se présentant sous la forme d'un corps liquide. Dans le domaine des emballages alimentaires, les liquides sont par exemple l'eau, les huiles telles que les vinaigrettes, les sauces telles que la sauce tomate, les crèmes, les graisses...

Selon une particularité de l'emballage de l'invention, ledit film barrière de protection comprend au moins une couche de nanofibre de cellulose.

Avantageusement, ladite couche de nanofibre de cellulose sert de film barrière de protection contre les gaz et les liquides. Ladite couche de nanofibre de cellulose est donc imperméable au gaz, notamment de l'air et aux liquides et empêche ces éléments d'atteindre la base de fibre moulée de biomasse.

De plus, ladite couche de nanofibre de cellulose est en tant que telle, compostable, biodégradable, scellable par un opercule, tout en étant compatible pour un contact avec les aliments.

L'emballage alimentaire de l'invention a donc pour avantage de respecter les normes de conditionnement des aliments, tout en étant intégralement compostable et biodegradable. L'emballage alimentaire de l'invention est respectueux de l'environnement, et des normes sanitaires de conditionnement des produits alimentaires.

En d'autres termes, l'intégralité des matériaux constituant l'emballage alimentaire de l'invention est recyclable facilement par les usagers. Pour traiter le déchet de l'emballage alimentaire, les consommateurs n'ont pas besoin de séparer la base de l'emballage de son film de protection, l'opération de recyclage est facilitée. Ainsi, la composition de l'emballage alimentaire de l'invention facilite son recyclage et respecte l'environnement.

En outre, ledit emballage alimentaire est simple, rapide et économique de conception, il peut être fabriqué à échelle industrielle sans difficulté.

De plus, selon un 1^{er} mode de réalisation de l'invention, ledit film barrière de protection consiste en une monocouche de nanofibre de cellulose, laminée ou pulvérisée, sur ladite base de fibre moulée de biomasse.

En d'autres termes, ladite monocouche de nanofibre de cellulose est apposée par lamination ou par pulvérisation sur ladite base de fibre moulée de biomasse. Tous types d'opérations de pulvérisation ou de lamination connues de l'homme du métier sont envisageables pour apposer la nanofibre de cellulose sur la base de fibre moulée de biomasse.

De préférence, ladite monocouche de nanofibre de cellulose est apposée par pulvérisation de sorte que la nanofibre de cellulose vient boucher les micro-trous à la surface de ladite base de fibre moulée de biomasse. Les micro-trous de ladite base de fibre moulée de biomasse lui confère sa perméabilité aux gaz, aux liquides et à la vapeur d'eau. Avec la pulvérisation de la monocouche de nanofibre de cellulose, ladite base de fibre moulée de biomasse ne consiste plus en une passoire traversée par les gaz, les liquides ou la vapeur d'eau. La surface de ladite base de fibre moulée de biomasse recouverte par pulvérisation de la monocouche de nanofibre de cellulose devient imperméable aux gaz, liquides et à la vapeur d'eau. Ces derniers éléments, ne peuvent plus traverser ladite base de fibre moulée de biomasse pour atteindre le contenu de l'emballage alimentaire, à savoir les aliments.

En d'autres termes, le fait d'apposer la monocouche de nanofibre de cellulose apporte les propriétés barrières, c'est-à-dire d'imperméabilité aux gaz et aux liquides à l'emballage alimentaire de l'invention.

Avantageusement, ladite monocouche de nanofibre de cellulose est compostable, biodégradable, répond aux normes sanitaires pour le contact avec les aliments, tout en permettant la fixation d'un opercule.

Le film barrière de protection sous forme de monocouche de nanofibre de cellulose présente une épaisseur minimum de 5 µm, de préférence 10 µm.

Cette épaisseur minimum de film confère à l'emballage alimentaire ses propriétés de barrière aux gaz et aux liquides. En dessous de cette épaisseur, la monocouche de nanofibre de cellulose est perméable aux gaz et aux liquides, ce qui rend l'emballage incompatible pour le contact avec les aliments car il existe un risque de déstructuration de la base.

Selon un second mode de réalisation préféré de l'invention, ledit film barrière de protection consiste en un film multicouche qui comprend au moins ladite au moins une couche de nanofibre de cellulose disposée entre deux couches de polyester aliphatique, ou, alternativement, entre deux films en cellulose.

De préférence, ledit polyester aliphatique comprend un polyester aliphatique ou une combinaison de polyesters aliphatiques choisis parmi la liste suivante : l'acide polylactique (PLA), le polybutyrate adipate téréphtalate (PBAT) ou la famille des polyhydroxyalcanoates (PHA), Polybutylène succinate (PBS). Le film en cellulose est du type commercialisé sous la marque Cellophane, ou NVS, ou NVO, par la société Futamura.

Avantageusement, les polyesters aliphatiques de la liste ci-dessus n'ont pas d'impact sur les aliments, sont compostables, biodégradables et permettent de sceller par un opercule l'emballage alimentaire de l'invention. En outre, les polyesters aliphatiques en tant que couches constituent également une barrière physique supplémentaire aux gaz et aux liquides aqueux ou gras, ou encore à la vapeur d'eau. En effet, les polyesters aliphatiques sont imperméables aux gaz et aux liquides lorsqu'ils se présentent sous la forme d'une couche présentant une épaisseur minimum de 20 µm. Les films en cellulose du type commercialisés sous la marque Cellophane ont des caractéristiques similaires.

Pour ce second mode de réalisation de l'invention, ledit film multicouche est un film multicouche laminé sur ladite base de fibre moulée de biomasse.

L'opération de lamination permettant d'apposer le film multicouche sur ladite base a pour avantage de recouvrir par une couche lisse la surface des micro-trous de passage des gaz, des liquides et de la vapeur d'eau présents dans ladite base de fibre moulée de biomasse. De cette manière, ni les gaz, ni les liquides, ni la vapeur d'eau ne traversent ladite base de fibre moulée de biomasse pour atteindre les aliments contenus dans ledit emballage alimentaire.

De préférence également, ledit film multicouche présente une épaisseur totale comprise entre 50 et 80 µm.

Selon une autre caractéristique de l'emballage alimentaire de l'invention, ladite biomasse de ladite base de fibre moulée de biomasse est choisie parmi la liste suivantes : de la cellulose mouillée provenant du bois, de la paille de blé, de la paille de riz, du chanvre, du bambou, de la canne à sucre, des céréales, ou des plantes fibreuses.

Avantageusement, ladite base de fibre moulée de biomasse est également compostable, biodégradable et scellable. Ladite base de fibre moulée de biomasse est donc en tant que telle également facilement recyclable par les utilisateurs et respectueuse de l'environnement.

Selon une autre caractéristique de l'emballage alimentaire de l'invention, ladite biomasse de ladite base de fibre moulée de biomasse comprend en outre, entre 1 et 10% en masse par rapport à la masse totale de ladite base de fibre moulée de biomasse, un ou plusieurs additifs choisis parmi la liste suivante : un dimère d'alkylcétène, de la nanofibre de cellulose, de l'amidon liquide cationique ou encore de l'épichlorohydrine de polyamide.

En d'autres termes, ladite base de fibre moulée de biomasse comporte un mélange de fibre de biomasse et d'additifs lui apportant diverses propriétés physicochimiques telles que la résistance à la rupture, une forme de rigidité, une résistance à l'humidité, une imperméabilité aux gaz, à la vapeur d'eau et aux liquides.

Selon une caractéristique supplémentaire de l'emballage de l'invention, ladite couche de nanofibre de cellulose comprend des fibres de largeur comprise entre 3 et 15 nm, de longueur comprise entre 10 nm et 1 µm.

Ainsi, les caractéristiques physicochimiques de la couche de nanofibre de cellulose apportent au film barrière de protection des propriétés barrières, imperméables aux gaz et aux liquides, tout en étant compostables, biodégradables et scellables. La nanofibre de cellulose constitue donc une bonne alternative aux films barrières connus dans le domaine des emballages alimentaires, qui respecte l'environnement et se recycle facilement.

Avantageusement, ledit emballage alimentaire résiste à des températures comprises entre -40°C et 200°C.

En d'autres termes, ledit emballage alimentaire peut être avantageusement congelé, maintenu au réfrigérateur, chauffé dans un micro-ondes ou dans un four sans être détérioré ou présenter un risque sanitaire dans la conservation des aliments. Plus spécifiquement, ledit emballage alimentaire de l'invention permet d'augmenter la « date limite de consommation » dit « DLC » des aliments. Il a été constaté par exemple que la DLC des aliments contenus dans l'emballage alimentaire de l'invention est de l'ordre de 10 jours dans des conditions de réfrigération à 4°C contre environ 7 jours avec les emballages alimentaires connus de l'art antérieur. Cette DLC peut être augmentée à 60 jours en cas de réfrigération à 4°C et maintien dans l'emballage de l'invention après aspiration des gaz, mise sous vide et operculation. Ainsi, en plus d'être respectueux de l'environnement, ledit emballage alimentaire de l'invention de par sa conception et composition permet d'augmenter la DLC des aliments qu'il contient, ce qui présente un avantage dans le domaine de la grande distribution alimentaire.

D'autres caractéristiques et avantages de l'invention ressortiront de la description détaillée qui va suivre des modes de réalisation non limitatifs de l'invention, en référence aux figures annexées, dans lesquelles :

- la figure 1 représente schématiquement une vue de profil en coupe éclatée d'un emballage alimentaire de l'invention présentant une monocouche laminée de nanofibre de cellulose en tant que film barrière de protection contre les gaz et les liquides,

- la figure 2 représente schématiquement une vue de profil en coupe éclatée d'un emballage alimentaire de l'invention présentant une monocouche pulvérisée de nanofibre de cellulose en tant que film barrière de protection contre les gaz et les liquides,

- la figure 3 représente schématiquement une vue de profil en coupe éclatée d'un emballage alimentaire de l'invention présentant, en tant que film de barrière de protection contre les gaz et les liquides, un film multicouche laminé, constitué d'une couche de nanofibre de cellulose internalisée entre deux couches de polyester aliphatique,

- la figure 4 représente schématiquement une vue de profil en coupe éclatée d'un emballage alimentaire scellé par un opercule présentant une monocouche laminée de nanofibre de cellulose en tant que film barrière de protection contre les gaz et les liquides.

La présente invention concerne un emballage alimentaire, compostable, biodégradable et scellable par un opercule. Ledit emballage alimentaire est destiné à emballer les produits alimentaires, il permet leur conservation au congélateur, au réfrigérateur, mais également leur cuisson au micro-onde- ou dans un four.

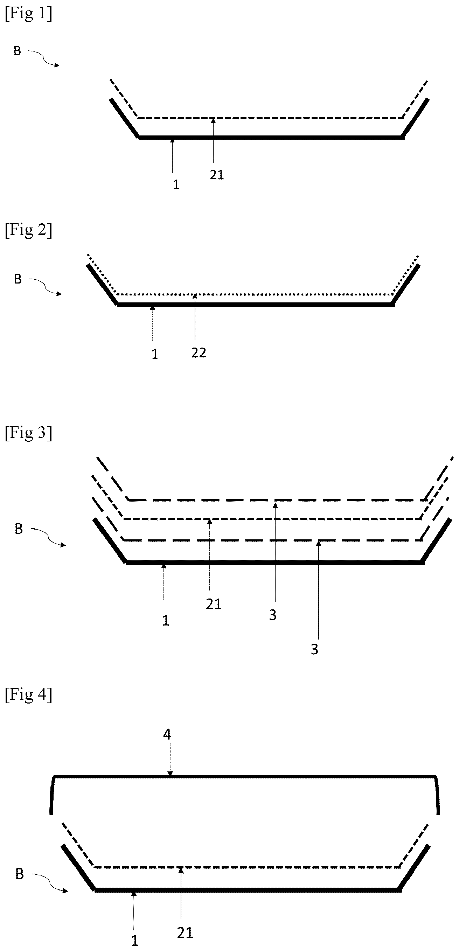

Selon un mode de réalisation préféré de l'invention, ledit emballage alimentaire se présente sous la forme d'une barquette alimentaire B telle que visible sur les figures 1 à 4.

Ledit emballage de l'invention comprend une base 1 de fibre moulée de biomasse, recouverte d'un film barrière de protection contre les gaz et les liquides.

De préférence, ladite biomasse de ladite base 1 est une fibre d'origine végétale comprenant de la cellulose moulée. De préférence également, ladite biomasse de la base 1 de fibre moulée de biomasse est choisie parmi la liste suivante : de la cellulose mouillée provenant du bois, de la paille de blé, de la paille de riz, du chanvre, du bambou, de la canne à sucre, des céréales, ou des plantes fibreuses.

Selon un mode de réalisation visible sur les figures 1 à 4, la base de fibre moulée de biomasse comprend un mélange de deux types de fibre végétale issue de bois vierge de type cellulose moulé, à savoir de la cellulose sous forme de fibre de bois dur avec de la cellulose sous forme de fibre de bois souple et résineux.

Avantageusement, la fibre cellulose de bois dur a une luminosité/brillance élevée et une valeur élevée de résistance à la traction « Rm » qui est de 5 MPa (Megapascal) ou N/mm². La valeur de la Rm est calculée avec la norme ISO 5270/1924-2. En d'autres termes, la Rm se calcule à partir de la force de traction maximale approchée Fm et de la surface de section transverse de l'éprouvette en début d'essai de traction:
Résistance à la traction Rm = Force de traction maximale Fm / Surface de section transverse de l'éprouvette S0

Avantageusement, la cellulose sous forme de fibre de bois souple et résineux possède également une luminosité/brillance élevée et une valeur élevée de résistance à la traction « Rm » qui est également de 5.

Ainsi, le mélange de cellulose de fibre de bois dur avec la fibre de bois souple, permet d'obtenir une base 1 de fibre moulée de biomasse qui possède une valeur de résistance à la traction Rm de l'ordre de 5 évitant ainsi qu'au contact des aliments l'emballage alimentaire de l'invention se déchire ou se détériore en plusieurs morceaux.

De préférence également, pour encore renforcer les propriétés de résistance à la traction et éviter la rupture de la base 1 ou lui apporter d'autres propriété physicochimiques, ladite base 1 de fibre moulée de biomasse comprend également, par rapport à sa masse totale, entre 1 et 10% d'un ou plusieurs additifs tels qu'un dimère d'alkylcétène, de la nanofibre de cellulose, de l'amidon liquide cationique ou encore de l'épichlorohydrine de polyamide.

Le dimère d'alkylcétène, en tant qu'additif, représente de préférence entre 1 et 10% en masse par rapport à la masse totale de ladite base 1 de fibre moulée de biomasse. Le dimère d'alkylcétène a pour rôle d'augmenter la résistance à l'humidité.

La nanofibre de cellulose, en tant qu'additif, représente de préférence entre 1 et 5% en masse par rapport à la masse totale de ladite base 1 de fibre moulée de biomasse. La nanofibre de cellulose a pour rôle de créer des propriétés d'imperméabilité aux gaz, à la vapeur d'eau et aux liquides pour ladite base 1 de fibre moulée de biomasse.

L'amidon liquide cationique, en tant qu'additif, représente de préférence entre 1 et 8% en masse par rapport à la masse totale de ladite base 1 de fibre moulée de biomasse. L'amidon liquide cationique a pour rôle d'apporter une résistance mécanique supplémentaire et renforcé à ladite base 1 de fibre moulée de biomasse, tout en augmentant également sa capacité de rétention et drainage des liquides.

L'épichlorohydrine de polyamide, en tant qu'additif, représente de préférence entre 1 et 5% en masse par rapport à la masse totale de ladite base 1 de fibre moulée de biomasse. L'épichlorohydrine de polyamide apporte également des propriétés de résistance mécanique supplémentaire à ladite base 1 de fibre moulée de biomasse.

Selon l'invention, ladite base 1 de fibre moulée de biomasse, avec ou sans ajout d'additifs est compostable, biodégradable par un opercule en tant que tel.

Selon une autre particularité de l'invention, ledit film barrière de protection comprend au moins une couche de nanofibre de cellulose.

Avantageusement, ladite couche de nanofibre de cellulose est compostable, biodégradable et scellable par un opercule en tant que tel.

Plus spécifiquement, ladite couche de nanofibre de cellulose 2 est biodégradable en 25 jours en respectant les normes ISO 14855-1999 et EN 14046 2003.

Les nanofibres de cellulose présentent des fibres de longueur moyenne comprise entre 3 et 15 nm et de largeur moyenne entre 10 nm et 1 µm.

La taille des nanofibres de cellulose donne à la couche ses propriétés de transparence à la lumière et ses propriétés de barrière aux gaz et aux liquides.

Avantageusement, ladite couche de nanofibre de cellulose est imperméable aux gaz et aux liquides, ainsi son application, sur ladite base 1 de fibre moulée de biomasse perméable, permet de rendre l'emballage alimentaire imperméable aux gaz et aux liquides. En d'autres termes, les gaz, liquides et la vapeur d'eau, capables de traverser ladite base 1 de fibre moulée de biomasse, sont bloqués par ladite couche de nanofibre de cellulose et ne peuvent pas atteindre les aliments contenus dans ledit emballage de l'invention. Ainsi, les aliments, de par la présence du film de protection, formant barrière aux gaz, liquide et à la vapeur d'eau, ne peuvent entrer en contact avec ces derniers. En conséquence, le film de protection évite la dégradation des aliments contenus dans ledit emballage de l'invention. En effet, la dégradation des aliments résulte en partie de la présence de ces gaz, liquides ou de la vapeur d'eau qui favorise une croissance microbienne responsable du pourrissement des aliments.

En outre, ladite couche de nanofibre de cellulose est adaptée pour être en contact direct avec les aliments sans engendrer leur dégradation.

Selon un mode de réalisation particulier visible sur les figures 1 et 4, ledit film barrière de protection consiste en une monocouche 21 de nanofibre de cellulose laminée sur ladite base 1 de fibre moulée de biomasse.

Selon ce mode de réalisation particulier, la monocouche 21 de nanofibre de cellulose laminée présente une épaisseur minimum de 5 µm, de préférence 10 µm.

Selon un autre mode de réalisation particulier visible sur la figure 2, ledit film barrière de protection consiste en une monocouche 22 de nanofibre de cellulose pulvérisée sur ladite base 1 de fibre moulée de biomasse.

Selon ce mode de réalisation particulier, la monocouche 22 de nanofibre de cellulose pulvérisée présente une épaisseur minium de 10 µm.

Pour le cas d'un film barrière de protection sous forme de monocouche de nanofibre de cellulose, l'épaisseur minimum de 5 µm permet de garantir les propriétés barrières de protection des aliments contenus dans ledit emballage, contre les gaz et les liquides. Ledit film barrière de protection, sous forme de monocouche de nanofibre de cellulose évite que les gaz et les liquides traversent ladite base 1 de fibre moulée de biomasse et atteignent les aliments. En dessous de cette épaisseur minimum, ladite monocouche de nanofibre de cellulose ne joue pas son rôle de film de protection et perd donc ses propriétés barrières.

Selon un autre mode de réalisation visible sur la figure 3, ledit film barrière de protection consiste en un film multicouche qui comprend au moins ladite au moins une couche de nanofibre de cellulose, qui est disposée entre deux couches de polyester aliphatique 3.

Tel que visible sur la figure 3, ledit film barrière multicouche peut comprendre une couche de polyester aliphatique 3, surmontée d'au moins une couche de nanofibre de cellulose 21, elle-même surmontée d'une couche de polyester aliphatique 3.

Selon ce mode de réalisation, ledit film multicouche est un film multicouche laminé sur ladite base 1 de fibre moulée de biomasse. En d'autres termes, dans le cas d'un film multicouche, la monocouche de nanofibre de cellulose 21 et les deux couches de polyester aliphatique 3 sont apposées par lamination sur ladite base 1 de fibre moulée de biomasse.

Selon un mode de réalisation particulier, les couches de polyester aliphatique 3 comprennent un polyester aliphatique ou une combinaison de polyester aliphatique choisi parmi la liste suivante : l'acide polylactique (PLA), le polybutyrate adipate téréphtalate (PBAT) ou la famille des polyhydroxyalcanoates (PHA) ou du Polybutylène succinate (PBS).

Les couches de polyesters aliphatiques possèdent également des propriétés de barrière aux gaz et aux liquides, tout en étant, en tant que telles, compostables, biodégradables et scellables par un opercule. Toutes les couches de polyesters aliphatiques 3 de l'invention sont donc intégralement imperméables aux gaz et aux liquides. En d'autres termes, les couches de polyesters aliphatiques 3 renforcent les propriétés de barrières naturelles de la couche de nanofibre de cellulose.

De préférence, l'épaisseur totale d'une couche de polyester aliphatique 3 est comprise entre 20 et 25 µm, de sorte à permettre l'imperméabilité aux gaz et aux liquides.

Ledit film multicouche présente une épaisseur totale comprise entre 50 et 80 µm et permet de garantir les propriétés barrières de protection contre les gaz et les liquides. Ledit film multicouche évite que les gaz, les liquides et la vapeur d'eau n'atteignent les aliments contenus dans l'emballage en traversant l'épaisseur de ladite base 1 de fibre moulée de biomasse.

Avantageusement, ledit film multicouche dans son intégralité est compostable, biodégradable et scellable par un opercule en tant que tel. De plus, il permet un contact direct avec les produits alimentaires sans les dégrader.

Ainsi, avec ledit emballage alimentaire de la présente invention, pour le recyclage, l'utilisateur n'a plus besoin de séparer ladite base 1 de fibre moulée de biomasse du film barrière de protection. Ledit emballage alimentaire de l'invention étant biodégradable et compostable dans son intégralité, plus besoin de trier pour le recycler dans son intégralité.

De manière avantageuse, ledit emballage alimentaire de l'invention est scellable par un opercule 4, tel que visible sur la figure 4. Ledit opercule 4 est dans un matériau qui est également compostable et biodégradable en tant que tel.

Selon un mode de réalisation particulier, ledit opercule 4 consiste en un film de scellage qui est dans un matériau de type nanofibres de cellulose.

En d'autres termes, ledit emballage alimentaire est avantageusement compostable, biodégradable et scellable dans son intégralité. Son recyclage est donc facile pour les utilisateurs.

En outre, ledit emballage alimentaire, par ses constituants, est compatible pour un usage dans le domaine alimentaire, tel que la restauration collective. Ledit emballage alimentaire de l'invention est sans danger et permet un contact direct avec les produits alimentaires.

De manière avantageuse, également, ledit emballage alimentaire de l'invention résiste dans son intégralité à des températures comprises entre - 40°C et + 200°C. En d'autres termes, ledit emballage alimentaire peut être congelé, réfrigéré ou encore chauffé au micro-ondes ou au four sans se dégrader et impacter les produits alimentaires qu'il contient.

Le tableau 1 ci-dessous montre les résultats et propriétés physicochimiques avantageuses obtenues avec l'emballage alimentaire de l'invention par rapport à un emballage traditionnel en carton recouvert de polypropylène.

**Tableau 1 comparatif :**

| | Base de fibre moulée de biomasse (invention) | Fibre moulée de biomasse recouvert d'un film monocouche de nanofibre de cellulose (invention) | Fibre moulée de biomasse recouvert d'un film multicouche de polyester aliphatique internalisant une couche de nanofibre de cellulose (invention) | Base de fibre de carton recou-vert d'un film de polypropylène (art antérieur) | Norme / protocole pour obtenir les résultats |
|---|---|---|---|---|---|
| Recyclable à +50% | OUI | OUI | OUI | OUI | EN13430 |
| Resistant au micro-onde | OUI | OUI | OUI | OUI | |
| Résistance sur une durée de 3 min température °C max/ min | 200°C /- 40°C | 200°C/ - 40°C | +140°C/ -40°C | +121°C /- 40°C | EN 1186 / EN10/2011 |
| Compostable | A domicile | A domicile | Industriel | Non compostable | ISO 14855/ISO16929/EN3432 |
| Barrière à l'oxygène ( Niveau de perméabilité à l'oxygène) | +3000 ( perméable) | +0,04 (imperméable) | +0,04 (imperméable) | +4000 (perméable) | ASTM D3985 |
| Taux de transmission de la vapeur d'eau | +1500 ( perméable) | +160 | +150 | +17 | ASTM F1249 |
| Epaisseurs du film (en µm) | Pas de film | Entre 5 et 40 | Entre 50 et 80 | Entre 60 et 80 | |
| Résistance mécanique à la rupture du film (en MPa) | | 200 | 65 | | ISO 527 |

L'emballage alimentaire de l'invention respecte donc l'environnement, et les normes de recyclage, avec une production facile, rapide et à moindre coût de production, tout en étant compatible pour un usage ou une conservation des produits alimentaires divers. L'emballage alimentaire de l'invention facilite donc la vie des utilisateurs qui, dans un but écologique, souhaitent le recycler.

En plus des avantages concernant le recyclage susmentionné, ledit emballage alimentaire de l'invention a pour effet supplémentaire de permettre d'augmenter la date limite de consommation des aliments qu'il contient. En effet, ledit emballage de l'invention impacte peu les denrées alimentaires, surtout lorsque l'emballage alimentaire contenant les aliments est fermé par un opercule après application d'un vide atmosphérique. Dans ce cas, il a été constaté que les aliments se conservent plus longtemps au sein de l'emballage de l'invention, avec une augmentation de la DLC allant de + 10 jours à + 60 jours par rapport aux emballages alimentaires de l'art antérieur. Cette augmentation du temps de conservation des aliments permet de limiter au sein de la grande distribution le gaspillage alimentaire.

L'emballage alimentaire de la présente invention est donc respectueux de l'environnement tout en permettant une meilleure gestion de la conservation des aliments, en limitant notamment le gaspillage alimentaire par une DLC élevée.

## Revendications

1. Emballage alimentaire, compostable, biodégradable et scellable, notamment de type barquette (B), comprenant une base (1) de fibre moulé de biomasse, recouverte d'un film barrière de protection contre les gaz et les liquides, **caractérisé en ce que** ledit film barrière de protection comprend au moins une couche de nanofibre de cellulose.

2. Emballage alimentaire, selon la revendication précédente, **caractérisé en ce que** ledit film barrière de protection consiste en une monocouche de nanofibre de cellulose laminée (21) ou pulvérisée (22) sur ladite base (1) de fibre moulée de biomasse, présentant une épaisseur minimum de 5 µm, de préférence 10 µm.

3. Emballage alimentaire, selon la revendication 1, **caractérisé en ce que** ledit film barrière de protection consiste en un film multicouche qui comprend au moins ladite au moins une couche de nanofibre de cellulose disposée entre deux couches de polyester aliphatique (3) ou, alternativement, entre deux films en cellulose.

4. Emballage alimentaire, selon la revendication précédente, **caractérisé en ce que** ledit polyester aliphatique comprend un polyester aliphatique ou une combinaison de polyesters aliphatiques choisis parmi la liste suivante : l'acide polylactique (PLA), le polybutyrate adipate téréphtalate (PBAT) ou la famille des polyhydroxyalcanoates (PHA), ou du Polybutylène succinate (PBS).

5. Emballage alimentaire, selon la revendication 3 ou selon la revendication 4, **caractérisé en ce que** ledit film multicouche est un film multicouche laminé sur ladite base (1) de fibre moulée de biomasse.

6. Emballage alimentaire, selon l'une quelconque des revendications précédentes, **caractérisé en ce que** ladite biomasse de ladite base (1) de fibre moulée de biomasse est choisie parmi la liste suivante : de la cellulose mouillée provenant du bois, de la paille de blé, de la paille de riz, du chanvre, du bambou, de la canne à sucre, des céréales, ou des plantes fibreuses.

7. Emballage alimentaire, selon l'une quelconque des revendications précédentes, **caractérisé en ce que** ladite biomasse de ladite base (1) de fibre moulée de biomasse comprend en outre, entre let 10% en masse par rapport à la masse totale de ladite base de fibre moulée de biomasse, un ou plusieurs additifs, choisis parmi la liste suivante : un dimère d'alkylcétène, de la nanofibre de cellulose, de l'amidon liquide cationique ou encore de l'épichlorohydrine de polyamide.

8. Emballage alimentaire, selon l'une quelconque des revendications précédentes, **caractérisé en ce que** ladite couche de nanofibre de cellulose comprend des fibres de largeur comprise entre 3 et 15 nm, de longueur comprise entre 10 nm et 1 µm

9. Emballage alimentaire, selon l'une quelconque des revendications précédentes, **caractérisé en ce qu'**il résiste à des températures comprises entre -40°C et 200°C.
